# EUROPÄISCHE PATENTANMELDUNG

(11) **EP 1 626 348 A1**
(43) Veröffentlichungstag der Anmeldung: **15.02.2006**
(21) Anmeldenummer: 04019271.8
(22) Anmeldetag: 13.08.2004
(51) Int. Cl.: G06F 17/30

(54) **Abfrageeinrichtung, elektronisches Archivierungsverfahren und -system**

(71) Anmelder: Hapke, Thorsten, 20251 Hamburg (DE)
(72) Erfinder: Hapke, Thorsten, 20251 Hamburg (DE)
(74) Vertreter: Glawe, Delfs, Moll

(57) **Zusammenfassung**

Ein Abfragesystem und ein elektronisches Archivsystem umfassen eine Eingabe-/Ausgabeeinheit (1, 2) und eine Recheneinheit, die mit einem Speicher (4) für Dokumente enthaltend (Nutz-)Daten und Metadaten zusammenwirkt. Die Recheneinheit weist ein Suchmodul (31) auf, das anhand von Suchwerten Treffermengen mit Ausprägungen von Suchwerten generiert.

Erfindungsgemäß weist die Recheneinheit ein Spezifikationsmodul (32) und ein Rekursionsmodul (33) auf. Das Spezifikationsmodul (32) umfasst eine Beobachtungseinheit, welche in den Dokumenten einer Treffermenge enthaltenen Metadaten anhand erster angelegter Bedingungen herausgreift, und eine Auswertungseinheit zur Analyse mittels eines statistischen Verfahrens und Ausgabe einer Ausprägungsliste der Metadaten. Das Rekursionsmodul (33) ist dazu ausgebildet, Ausprägungen von Metadaten aus der Ausprägungsliste anhand zweiter angelegter Bedingungen herauszugreifen und als Suchwerte an das Suchmodul (31) zur Wiederholung zu übergeben, bis ein Abbruchsignal anliegt.

Die Erfindung nutzt eine automatisierte statistische Auswertung der Metadaten eines elektronischen Archivs, um durch rekursive Einbeziehung relevanter Metadaten die Effizienz von Abfrage und Erschließung zu steigern. Die sukzessive Spezifikation der Abfrage bzw. der Vorgaben mündet in einer relevanten Ergebnismenge.

## Beschreibung

Abfrageeinrichtung und Verfahren für elektronische Archivsysteme sowie elektronisches Archivsystem, das mit Hilfe des erfindungsgemäßen Verfahrens zugleich eine automatisierte Klassifizierung von Dokumenten ermöglicht.

Die Erfindung betrifft ein elektronisches Archivsystem mit einem Speicher, einer Recheneinheit, einer Eingabe- und einer Ausgabeeinheit, wobei der Speicher ausgebildet ist zum Speichern einer Menge von Dokumenten, die gegliedert sind in (Nutz-)Daten und Metadaten, und wobei die Recheneinheit der Datenverarbeitung dient. Die Datenverwaltung wird vorzugsweise über eine Datenbank organisiert. Die Dokumente des Archivs werden über die Recheneinheit mit Hilfe eines Indexierungsmoduls indexiert, wobei ein Suchmodul, mittels der Recheneinheit, so ausgebildet ist, dass mit Rückgriff auf den Index, Dokumentmengen (Treffermengen) generiert werden, die die Ausprägungen von Suchwerten enthalten (so bspw. die Treffermenge einer Volltextsuche).

Elektronische Archivsysteme und Verfahren zum Abfragen von elektronischen Archivsystemen erfahren in jüngster Zeit große Aufmerksamkeit. Während Datenbanksysteme, die die Speicherung und Verwaltung großer Mengen strukturierter Daten erlauben, mit relationalen und objektorientierte Datenbanken bereits einen hohen Reifegrad erreicht haben, fehlen für elektronische Archivsysteme, die Wissen (in Form von Texten) und damit aus Sicht der Datenverarbeitung nur wenig strukturierte Daten verwalten, noch vergleichbare Verfahren zur effizienten Dokumentstrukturierung (-modellierung), Dokumentverwaltung und Dokumentverarbeitung.

Zunächst zeigt sich das Problem im Kontext der konventionellen Textbearbeitung. Dateisysteme - wie beispielsweise auf herkömmlichen Windows PC's - offenbaren bei der Verwaltung größerer Dokumentmengen rasch die Begrenztheit einfacher Dateistrukturen (wie bspw. Ordnerhierarchien). Elektronische Archivsysteme verwenden daher häufig Datenbanken, die über eine automatische formale Erschließung der Dokumente (Generierung von Volltextindizes) und spezielle Suchmodule einen verbesserten Zugriff auf große Dokumentmengen ermöglichen sollen (vgl. oben). Auch das sich rasant entwickelnde Internet gehört in diesen Kontext. Das WorldWideWeb ist ein dezentral organisiertes elektronisches Archivsystem, das für den Nutzer riesige Dokumentmengen verfügbar macht. Die aus offenkundiger Vorbenutzung bekannten Suchmaschinen wie Altavista, Google oder Metacrawler liefern bei einer Abfrage zwar häufig eine große Anzahl von Treffern, deren Relevanz in Bezug auf die gewünschte Information jedoch häufig zu wünschen übrig lässt. Die Trefferlisten müssen von Hand durchgesehen werden, um die wirklich relevanten Dokumente zu ermitteln. Das ist aufwändig und bei großen Treffermengen praktisch nicht mehr durchführbar.

Dem erfindungsgemäßen Verfahren liegt die Aufgabe zugrunde, ein Abfrageeinrichtung für elektronische Archivsysteme bereitzustellen, bei dem die oben genannten Nachteile vermieden oder zumindest verringert sind, und das sich für eine Automatisierung eignet.

Die erfindungsgemäße Lösung liegt in einer Abfrageeinrichtung und einem Verfahren mit den Merkmalen der unabhängigen Ansprüche. Vorteilhafte Weiterbildungen sind Gegenstand der abhängigen Ansprüche.

Erfindungsgemäß ist ein elektronisches Archivsystem gegeben, mit einem Speicher, einer Recheneinheit, einer Eingabe- und einer Ausgabeeinheit, wobei der Speicher ausgebildet ist zum Speichern einer Menge von Dokumenten, die gegliedert sind in (Nutz-)Daten und Metadaten, und wobei die Recheneinheit der Datenverarbeitung dient. Die Datenverwaltung wird vorzugsweise über eine Datenbank organisiert. Die Dokumente des Archivs werden über die Recheneinheit mit Hilfe eines Indexierungsmoduls indexiert, wobei ein Suchmodul, mittels der Recheneinheit, so ausgebildet ist, dass mit Rückgriff auf den Index, Dokumentmengen (Treffermengen) generiert werden, die die Ausprägungen von Suchwerten enthalten (so bspw. die Treffermenge einer Volltextsuche). Suchwerte sind vorzugsweise Daten, Metadaten und logische Verknüpfungen derselben. Andere Zugriffsweisen des Suchmoduls auf die Dokumente seien aber nicht ausgeschlossen.

Erfindungsgemäß ist vorgesehen, dass die Recheneinheit bzw. Datenverarbeitungseinheit des Abfragesystems ein Spezifikationsmodul und ein Rekursionsmodul umfasst, wobei das Spezifikationsmodul eine Beobachtungseinheit enthält, welche eine mit dem Suchmodul ermittelte Treffermenge übernimmt und die in den Dokumenten einer Treffermenge enthaltenen Metadaten anhand erster angelegter Bedingungen herausgreift und als Metadatenmatrix ausgibt, eine Auswertungseinheit, die zur Analyse mittels eines voreinstellbaren statistischen Verfahrens ausgebildet ist und eine Ausprägungsliste der Metadaten ausgibt und wobei das Rekursionsmodul dazu ausgebildet ist, Ausprägungen von Metadaten aus der Ausprägungsliste anhand zweiter angelegter Bedingungen herauszugreifen und als Suchwerte an das Suchmodul zur Wiederholung zu übergeben, bis ein Abbruchsignal angelegt ist.

### Zuerst seien einige der verwendeten Begriffe erläutert:

Die Erfindung beruht auf dem Gedanken die Abfrageeinrichtung für ein elektronisches Archivsystem so zu organisieren, dass die über ein Suchmodul generierten Treffermengen an ein Spezifikationsmodul übergeben werden, das sie automatisch auswertet. Die in einer konventionellen Archivsuche mittels der Suchwerte generierten Treffermengen bilden also nur einen Zwischenschritt, der durch die Übergabe der Treffermenge an das Spezifikationsmodul eine sukzessive Spezifikation der Abfrage induziert. Vorschläge zur weiteren Spezifikation einer Abfrage ermittelt das Spezifikationsmodul über eine statistische Auswertung der Metadaten, die in den Dokumenten der Treffermenge enthalten sind.

Zweckmäßig ist es, die Auswertungseinheit über einen Reihenspeicher mit mehreren alternativen statistischen Verfahren und einem Selektor zur Auswahl eines der gespeicherten statistischen Verfahren zu versehen. Es hat sich gezeigt, dass Archivsysteme für unterschiedliche Fachgebiete am besten mit unterschiedlichen statistischen Verfahren zu bearbeiten sind. Diese Zuordnung ist aber nicht unbedingt starr, sondern kann auch von der gewählten Abfrage abhängen. Mit dem Selektor ist es ermöglicht, dass passend zu der jeweiligen Abfrage ein statistisches Verfahren aus dem Reihenspeicher ausgelesen und angewendet wird. Der Selektor ist zweckmäßigerweise so ausgebildet, dass er ein optimales statistisches Verfahren auswählt. Dies kann anhand voreinstellbarer Kriterien ermittelt werden, wobei verschiedene der eingespeicherten statistischen Verfahren gegeneinander verglichen werden und das beste schließlich von dem Selektor ausgewählt wird. Vorzugsweise ist dazu ein Scoring-Modul vorgesehen, das zur Bewertung der einzelnen statistischen Verfahren ausgebildet ist. Die Auswahl geschieht dann vorzugsweise automatisch anhand eines voreinstellbaren Optimierungskriteriums, kann aber gewünschtenfalls auch von Hand durchgeführt sein.

Vorzugsweise ist das Rekursionsmodul so ausgebildet, dass ermittelte Suchwerte, also gemäß dem statistischen Verfahren relevante Metadaten, an das Suchmodul zurück übergeben werden. Damit wird erreicht, dass die ausgewählten Suchwerte und geeignete logische Verknüpfungen derselben im Suchmodul dargestellt sind und der nächste Umlauf initiiert ist. Durchläuft eine Abfrage das Suchmodul, das Spezifikationsmodul und das Rekursionsmodul entspricht dies einem Umlauf des erfindungsgemäßen Verfahrens.

Die Spezifikation kann dabei mit Hilfe des Rekursionsmoduls automatisch weitergeführt werden, es kann aber auch ein Benutzereingriff zwischen den Rekursionsschritten vorgesehen sein. Dazu ist zweckmäßig, die vom Spezifikationsmodul ausgegebenen Vorschläge zur Spezifikation der Abfrage an eine Ausgabeeinheit zu übermitteln. Hierdurch können die relevanten Vorschläge mit Hilfe der Eingabeeinheit durch den Benutzer ausgewählt werden oder es kann alternativ auch ein Abbruchsignal für die Rekursion ausgelöst werden. Das Rekursionsmodul prüft nach jedem Umlauf, ob ein Abbruchsignal vorliegt. Eine im Sinne des Verfahrens ultimative Abbruchbedingung für die automatische Spezifikation einer Abfrage ist eine vollständige Rekursion, also eine elementare bzw. homogene Metadatenmatrix (Unentscheidbarkeit). Im Rekursionsmodul sind ggf. bedingte Vorgaben für die geeigneten Anschlussoperationen angelegt. Ist beispielsweise eine im Rekursionsmodul angelegte Abbruchbedingung für eine Archivsuche erfüllt, wird die im vorherigen Umlauf vom Suchmodul ermittelte Treffermenge als hinreichend spezifizierte Ergebnismenge bzw. Ergebnisliste ausgegeben.

Das Rekursionsmodul erfüllt also, neben der Übergabe geeigneter Suchwerte vom Spezifikationsmodul an das Suchmodul, zwei weitere wesentliche Funktionen. Zum einen organisiert es die Auswahl der Anfangsbedingung für den jeweils nachfolgenden Umlauf. Und zwar so, dass das Rekursionsmodul aus der mit Hilfe der Treffermenge der vorherigen Suche im Spezifikationsmodul erstellten Ausprägungsliste der Metadaten, geeignete Suchwerte für die nächste Suche bzw. den nächsten Umlauf herausgreift. Zum anderen überprüft das Rekursionsmodul, ob durch den jeweils vorhergehenden Umlauf Abbruchbedingungen für die Rekursion erfüllt wurden und organisiert die Anschlussoperationen.

Unter einem Speicher wird eine Einrichtung zum Speichern von Dokumenten über eine längere Zeit verstanden. Speicher in diesem Sinne sind insbesondere Festplatten, CD- oder DVD-Datenträger, andere magnetische oder optische Datenträger, aber auch auf Halbleitertechnologie basierende Speicherkarten, wie bspw. CF- oder SD-Karten. Vorzugsweise ist der Speicher als verteilter Speicher ausgeführt. Unter einen verteilten Speicher wird verstanden, dass der Speicher aus mehreren Komponenten zusammengesetzt ist, die an verschiedenen Orten installiert sind und über geeignete Datenleitungen miteinander verbunden sind. Dies ermöglicht es, für das erfindungsgemäße Abfragesystem auf Dokumente in einem verteilten System zuzugreifen, wobei die einzelnen Komponenten über Datenleitungen wie bspw. das Internet miteinander verbunden sind. Dadurch können auch räumlich weit entfernt auseinander befindliche Datensammlungen zu einem übergreifenden Archivsystem zusammengefasst werden, in der dann gemäß der Erfindung abgefragt werden kann. Die Stärke des erfindungsgemäßen Verfahrens, die impliziten, durch die Metadaten repräsentierten Strukturen eines elektronischen Archivs transparent zu machen, wirkt sich hierbei besonders vorteilhaft aus.

Unter einer Eingabe- und einer Ausgabeeinheit wird ein zur Interaktion mit einem menschlichen Benutzer geeignetes Terminal verstanden. Es umfasst in der Regel einen Bildschirm zur Ausgabe und eine Tastatur mit einer Zeigeeinrichtung (Maus) zur Eingabe. Andere Arten von Eingabe-, Ausgabeeinheiten sollen aber nicht ausgeschlossen sein. Insbesondere soll auch umfasst sein, dass die Daten auf digitalem Weg von einem anderen Computersystem eingegeben bzw. abgerufen werden.

Ein Abfragesystem, dass das erfindungsgemäße Verfahren wie zuvor beschrieben nutzt, ermöglich eine automatisierte Spezifikation von Abfragen in beliebigen elektronischen Archivsystemen, soweit die archivierten Dokumente mit Hilfe von Metadaten inhaltlich strukturiert sind.

Bei dem im folgenden beschriebenen erfindungsgemäßen Archivsystem wird zusätzlich ein Erschließungsmodul eingesetzt, über dass die einheitliche Erschließung der Dokumente technisch kontrolliert wird. Durch das Erschließungsmodul wird also eine Grenze ausgebildet, die die einheitliche Erschließung der Dokumente mit relevanten Metadaten erzwingt. Dem erfindungsgemäßen Archivsystem liegt die Aufgabe zugrunde, die durch die fachliche Erschließung der Dokumente gewonnene Wissensbasis, so zu inferieren, dass das System für fachliche Fragen eigenständige Lösungsvorschläge generiert und zugleich die fachliche Erschließung der Dokumente eines elektronischen Archivs so zu automatisieren, dass eine qualitativ hochwertige Erschließung bzw. Klassifikation großer Dokumentmengen und somit eine homogene Systemarchitektur gewährleistet wird.

Erfindungsgemäß ist ein elektronisches Archivsystem gegeben, mit einem Speicher, einer Recheneinheit, einer Eingabe- und einer Ausgabeeinheit, wobei der Speicher ausgebildet ist zum Speichern einer Menge von Dokumenten, die gegliedert sind in (Nutz-)Daten und Metadaten, und wobei die Recheneinheit der Datenverarbeitung dient. Die Datenverwaltung wird vorzugsweise über eine Datenbank organisiert. Die Dokumente des Archivs werden über die Recheneinheit mit Hilfe eines Indexierungsmoduls indexiert, wobei ein Suchmodul, mittels der Recheneinheit, so ausgebildet ist, dass mit Rückgriff auf den Index, Dokumentmengen (Treffermengen) generiert werden, die die Ausprägungen von Suchwerten enthalten (so bspw. die Treffermenge einer Volltextsuche).

Suchwerte sind vorzugsweise Daten, Metadaten und logische Verknüpfungen derselben. Andere Zugriffsweisen des Suchmoduls auf die Dokumente seien aber nicht ausgeschlossen. Darüber hinaus ist gegeben ein Erschließungsmodul, dass die zu erschließenden Dokumente zur Bearbeitung verfügbar macht und die Eingabe von Metadaten (Typ 2) für die fachlichen Erschließung der Dokumente des Archivs ermöglicht.

Bevor die technischen Zusammenhänge genauer beschrieben werden, noch einige Worte zu den konzeptionellen Vorgaben.

Wesentlich für die Leistungsfähigkeit des erfindungsgemäßen Archivsystem sind aussagefähige Metadaten. Daher ist eine homogene Systemarchitektur überaus wichtig, bei der die Datenintegrität der Metadaten des elektronischen Archivsystems durch ein konsistentes Wissensmodell, eine Ontologie kontrolliert wird. Die Bedeutung aussagefähiger Metadaten wird auch vom WorldWideWeb Konsortium gesehen, welches unter diesen Prämissen das Semantic Web vorantreibt.

Erst eine homogene Systemarchitektur ermöglicht, die Leistungsfähigkeit von Computersystemen für die Verarbeitung von Texten und des darin repräsentierten Wissens in spezifischer Weise fruchtbar zu machen. Eine homogene Systemarchitektur, die sich aus der konsistenten Verwendung aussagefähiger Metadaten ergibt, bezeichnet einen eigenständigen Anwendungsbereich der computergestützten Textverarbeitung, für den das erfindungsgemäße Archivsystem besondere Vorteile bietet. Diese Systemarchitektur ist nicht auf das zur Speicherung der Daten verwandte Datenbankschema bzw. die verwendete Datenbank zurückführbar.

Die formalen Vorgaben für eine homogene Systemarchitektur bilden die bekannten Dokumentbeschreibungssprachen wie XML, SGML. Die mit Hilfe der Dokumentbeschreibungssprachen generierten Metadaten ermöglichen, dass in den Texten eines Archivsystems repräsentierte "Wissens" explizit anzugeben.

Die präzise, konsistente Verwendung der Metadaten, die zu einer homogenen Systemarchitektur führt, wird dann vornehmlich unter den Begriffen Wissensmodellierung bzw. Ontologien thematisiert (vgl. hierzu Dieter Fensel, Ontologies: A Silver Bullet for Knowledge Management and Electronic Commerce, Springer Verlag in Berlin, 2004). Unter Ontologien wird dabei eine durch eine Nutzergemeinde verhandelte und akzeptierte Beschreibungsform, eine explizite, geteilte Konzeptualisierung eines Gegenstandsbereichs verstanden.

Im Kontext der elektronischen Archivierung werden durch die Wissensmodellierung zwei Ebenen berührt. Zum einen die Festlegung der wesentlichen Elemente und Relationen der Dokumente in Form des Dokumentformats (<Autor>, <Adresse> usw.), wodurch eine homogene Erschließung von Texten möglich wird. Referenzpunkt der Konzeptualisierung ist hier die Textstruktur der zu archivierenden Texte (Presseartikel, Urteile, Diagnosen). Die zweite Ebene der Wissensmodellierung betrifft eine konsistente Konzeptualisierung des Gegenstandsbereichs auf den sich die Texte thematisch bzw. fachlich beziehen. Referenzpunkt ist hier die Wissensdomäne (wie bspw. Physik, Biologie, Medizin, Recht usw.). Dies ermöglicht eine konsistente fachliche Erschließung bzw. Klassifikation der Texte.

Dokumente sind durch Metadaten erschlossene Texte, wobei im Kontext homogener Systemarchitekturen die konsistente Wissensmodellierung, eine Ontologie eine hohe Datenintegrität der Metadaten garantiert. Die homogene Erschließung der Texte im Hinblick auf die einheitliche Anwendung eines Dokumentformats (Metadaten (Typ 1)) wird im folgenden vorausgesetzt. Es sei darauf hingewiesen, dass die Metadaten, die die fachliche Erschließung repräsentieren (Metadaten (Typ 2)) auf der Ebene des Dokumentformats im folgenden durch die Metadaten "Typus" beschrieben werden und entsprechend im Segment "Typus" enthalten sind.

Erfindungsgemäß ist vorgesehen, dass die Recheneinheit bzw. Datenverarbeitungseinheit ein Spezifikationsmodul und ein Rekursionsmodul umfasst, wobei das Spezifikationsmodul eine Beobachtungseinheit enthält, welche eine mit dem Suchmodul ermittelte Treffermengen übernimmt und die mit den Dokumenten einer Treffermenge verbundenen Metadaten (Typ 2) anhand der ersten angelegten Bedingungen herausgreift und als Metadaten (Typ 2)-Matrix ausgibt, eine Auswertungseinheit, die zur Analyse mittels eines voreinstellbaren statistischen Verfahrens ausgebildet ist und eine Ausprägungsliste der Metadaten (Typ 2) ausgibt und wobei das Rekursionsmodul dazu ausgebildet ist, die Metadaten (Typ 2) aus der Ausprägungsliste anhand der zweiten angelegten Bedingungen herauszugreifen und als Suchwert an das Suchmodul zur Wiederholung zu übergeben, bis ein Abbruchsignal angelegt ist.

Außerdem ist vorgesehen, dass die Bearbeitungseinheit des Erschließungsmodul es erlaubt, aus den fachlich zu erschließenden Dokumenten Suchwerte herauszugreifen (Drag and Drop) oder alternativ das Erschließungsmodul die Bearbeitungseinheit mit einem statistischen Verfahren koppelt, so dass für jedes zu erschließende Dokument relevante Suchwerte ermittelt und an das Suchmodul übermittelt werden. Die mit Hilfe der Suchwerte durch das Suchmodul ermittelte Treffermenge wird an das Spezifikationsmodul übergeben und die Spezifikation mittels des Rekursionsmoduls solange fortgesetzt bis ein Abbruchsignal angelegt ist. Die für die fachliche Erschließung relevanten Metadaten (Typ 2) werden an das Erschließungsmodul zurück übermittel und für eine fachliche Erschließung der Dokumente einem Nutzer vorgeschlagen oder automatisch mit diesen verknüpft.

Das erfindungsgemäße Verfahren wird im folgenden im Kontext des erfindungsgemäßen Abfragesystems und des erfindungsgemäßen Archivsystems unter Bezugnahme auf die beigefügte Zeichnung erläutert, in der vorteilhafte Ausführungsbeispiele der Erfindung dargestellt sind. Es zeigen:
- Fig. 1: eine schematische Übersichtsdarstellung eines konventionellen Archivsystems mit homogener Systemarchitektur
- Fig. 2a: eine schematische Übersichtsdarstellung des erfindungsgemäßen Abfragesystem
- Fig. 2b: eine schematische Übersichtsdarstellung eins Ausführungsbeispiel der Erfindung zur automatisierten Implementierung und Nutzung einer homogenen Systemarchitektur;
- Fig. 3a: eine schematische Übersichtsdarstellung des erfindungsgemäßen Archivsystems in einem Erschließungsmodus;
- Fig. 3b: eine schematische Übersichtsdarstellung des erfindungsgemäßen Archivsystems in einem Abfragemodus;
- Fig. 4a: eine Darstellung von einem ersten Satz von Beispieldaten;
- Fig. 4b: eine Darstellung von einem zweiten Satz von Beispieldaten;
- Fig. 5a,b: eine Darstellung eines Beispiels, in dem Lösungsvorschläge mittels des erfindungsgemäßen Archivsystems generiert werden;
- Fig. 6: eine formale Struktur des in dem Speicher enthaltenen Archivs;
- Fig. 7: eine formale Struktur des Archivs gemäß Fig. 6 nach Erschließung;
- Fig. 8: ein Ergebnis einer automatischen Indexierung des Archivs gemäß Fig. 7;
- Fig. 9: eine Darstellung der Funktionsweise des erfindungsgemäßen elektronischen Archivs und des Verfahrens; und
- Fig. 10: eine Darstellung des Ergebnisses in Abhängigkeit von den zugrunde liegenden Metadaten.

Zum Ablauf des Verfahrens gemäß der Erfindung werden folgende Erläuterungen gegeben:

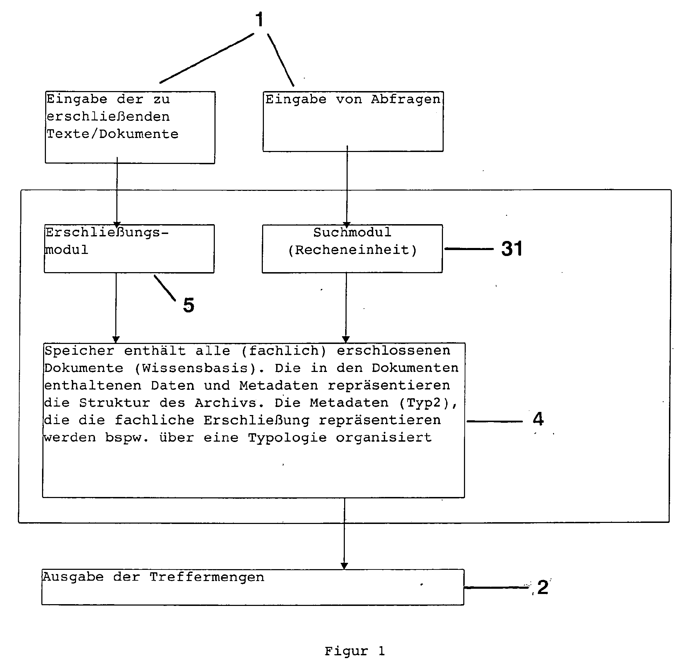

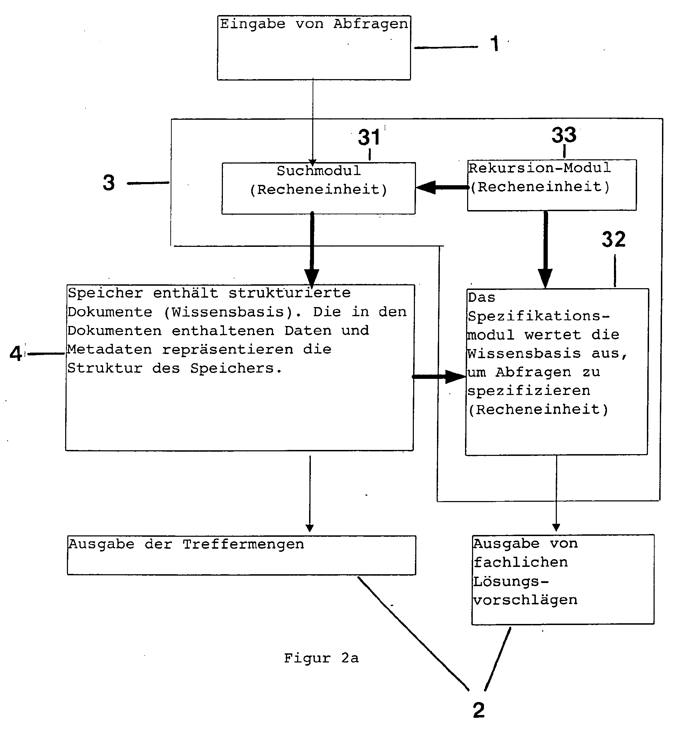

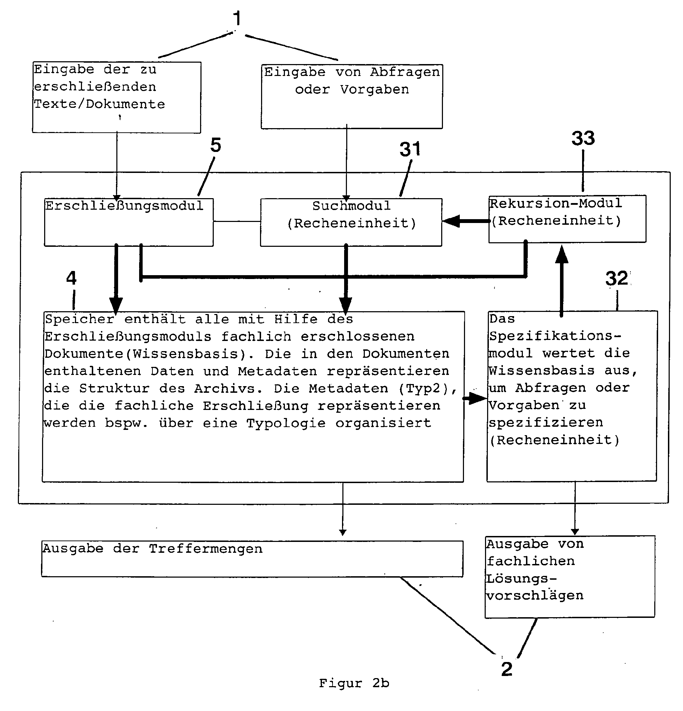

In Fig. 2b ist eine schematische Übersichtsdarstellung eines Ausführungsbeispiels der erfindungsgemäßen Archivsystems zur Implementierung und Nutzung einer homogenen Systemarchitektur dargestellt. Zum Vergleich ist in Fig. 1 ein Beispiel für ein konventionelles Archivsystem mit homogener Systemarchitektur dargestellt.

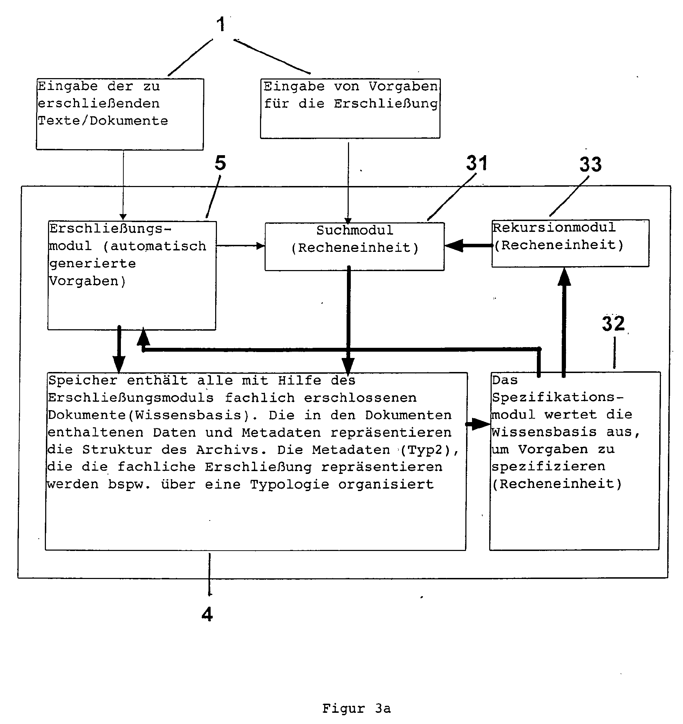

Im Beispiel wird die homogene Systemarchitektur durch eine Typologie gewährleistet. Unter einer Typologie wird verstanden, eine systematisch geordnete Menge von Typen, die einen Gegenstandsbereich in anpassbarer Weise angemessen konzeptualisiert (so bspw. eine systematische Themengliederungen der Wissensdomänen Wirtschaft, Medizin, Recht usw.). Mittels eines Erschließungsmodul 5 erfolgt die Verknüpfung der Dokumente mit den gemäß der Typologie relevanten Typen im Segment "Typus". Im Segment "Typus" des Dokuments sind somit die Typendaten (Metadaten (Typ 2)) abgelegt. Die Gesamtheit der erschlossenen Dokumente im Speicher 4 bildet das Archiv - und da die Dokumente durch die Typusdaten fachlich explizit erschlossen und auf die Typologie zurückbezogen sind, ist das implementierte Archiv zugleich Wissensbasis. Eine besondere Stärke der Erfindung liegt darin, dass sie eine Organisation das Archiv in der Weise sich zu Nutze macht, dass die Wissensbasis auch für eine automatisierte fachliche Erschließung neuer Dokumente eingesetzt wird (Fig. 3a).

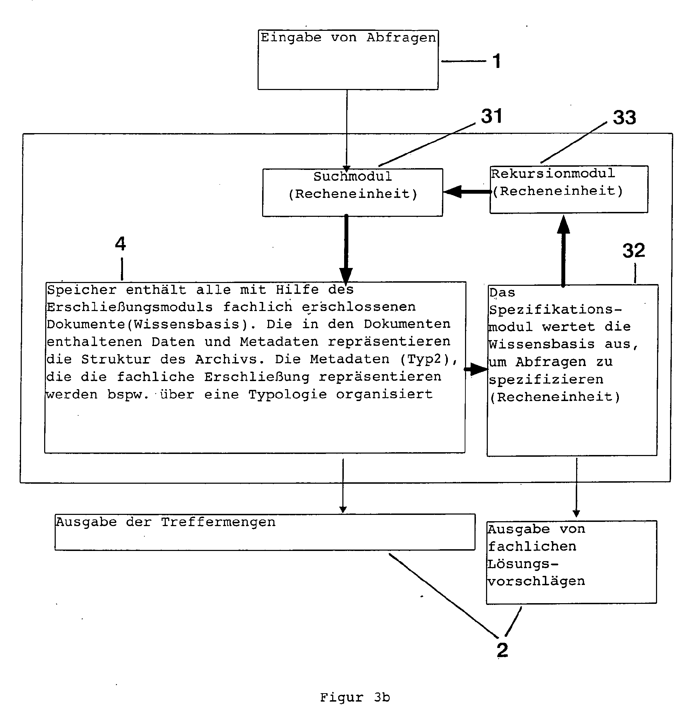

Es können nun zwei Formen von Abfragen formuliert werden. Zum einen eine konventionelle Archivsuche, bei der Suchwerte über eine Eingabeeinheit 1 eingeben werden und die über das Suchmodul 31 generierte Treffermenge mit Hilfe des Spezifikationsmodul 32 solange weiter spezifiziert wird, bis am Ende eine Treffermenge bzw. Dokumentmenge von hoher Relevanz in Form einer Trefferliste angezeigt wird. In diesem Fall wird die Effizienz der Archivsuche deutlich erhöht. - Eine zweite Form von Abfragen nutzt die Erfindung vor allem, um mit Hilfe der Wissensbasis einen Überblick über die kollektive Wissenspraxis einer Wissensdomäne zu gewinnen, wie sie durch das fachlich erschlossene Archiv repräsentiert wird. Auch in diesem Fall werden Suchwerte über eine Eingabeeinheit 1 eingeben und die über das Suchmodul 31 generierte Treffermenge mit Hilfe des Spezifikationsmodul 32 ausgewertet. Dabei wird jedoch vorrangig die Spezifikation des Wissens über die Wissensbasis intendiert (in den Beispielen formal über die Typen und die zugehörigen Typendaten repräsentiert). Es werden also mit Hilfe des Rekursionsmodul 33 kontinuierlich Wissensbezüge respezifiziert, so dass es auf das jeweilige fachliche Gebiet bezogene Lösungsvorschläge generiert (Fig. 3b). Ein System mit diesen Eigenschaften wird in der einschlägigen Literatur auch als Expertensystem definiert (so bspw. Karl Kubel "Entwicklung und Einsatz von Expertensystemen", Springer-Verlag, Berlin Heidelberg, S.17 f.)

Auf beide Abfrageformen soll in jeweils einem Beispiel eingegangen werden.

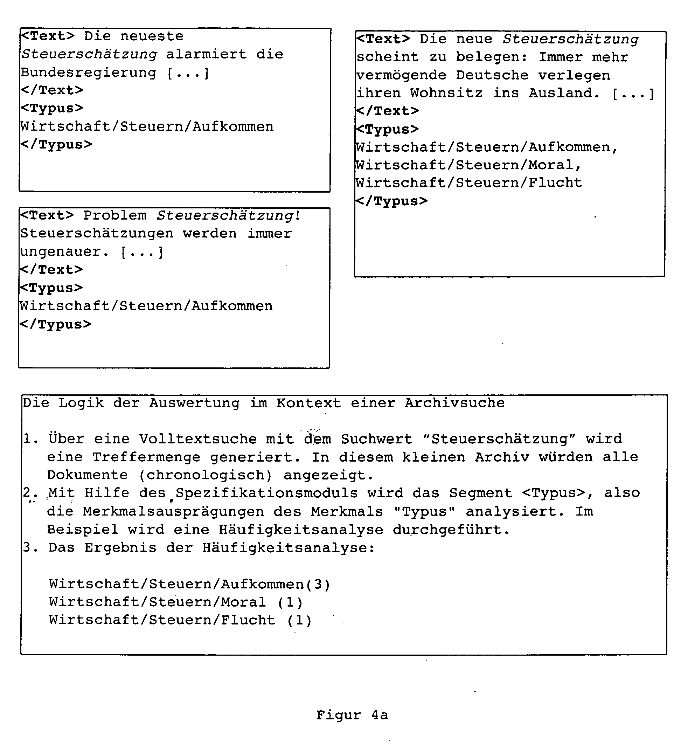

In Fig. 4a sind drei fachlich erschlossene Dokumente als ein kleines Archiv dargestellt. Es handelt sich um ein Beispiel aus dem Bereich der Wirtschaft. Die drei Dokumente weisen einen gemeinsamen Grundaufbau auf. Jedes umfasst ein Segment <Text> und ein Segment <Typus>. Das Segment <Text> enthält den eigentlichen (Fließ-)Text, der aus Gründen der Übersichtlichkeit verkürzt wiedergegeben ist. Das Segment <Typus> enthält die Typusdaten (-ausprägungen), mit denen das Dokument gemäß einer zuvor erstellten Typologie erschlossen wurde. Den Dokumenten können mehrere (1..n) fachlich sinnvolle Typen zugeordnet werden. Das Funktionsprinzip der Erfindung im Kontext einer Archivsuche stellt sich wie folgt dar. In einem ersten Schritt wird mit dem Suchwert, hier das Suchwort "Steuerschätzung", mit Rückgriff auf das Suchmodul 31 eine Treffermenge erzeugt. In dem dargestellten Beispiel eines aus drei Dokumenten bestehenden Archivs, werden alle Dokumente erfasst. In einem zweiten Schritt werden mit Hilfe des statistischen Verfahrens die Ausprägungen der Metadaten (Typ 2), also die Typendaten im Segment <Typus> analysiert. Als statistisches Verfahren wird eine Häufigkeitsanalyse eingesetzt. Das Ergebnis der im Spezifikationsmodul 32 durchgeführten Häufigkeitsanalyse stellt sich im Beispiel wie folgt dar:
Wirtschaft/Steuern/Aufkommen (3)
Wirtschaft/Steuern/Moral (1)
Wirtschaft/Steuern/Flucht (1).

Die Heuristik bietet dem Nutzer verschiedene Einsichten, da die Bezüge der Wissensdomäne transparent gemacht werden, und die so die weitere Suche anleiten können:
- Der Typus "Wirtschaft/Steuern/Aufkommen" ist für das Suchwort "Steuerschätzung" von hoher Relevanz;
- zwei weitere Typen (hier Themen) sind für das Problem des Steueraufkommens relevant;
- es besteht eine Verbindung zwischen dem Thema Steueraufkommen und dem Thema Steuerflucht, denn offensichtlich vermindert Steuerflucht das Steueraufkommen;
- in einem größeren Archiv gäbe es für den Suchwert "Wirtschaft/Steuern/Aufkommen" möglicherweise weitere interessante (spezifische) Dokumente (d.h. Artikel zum Thema Steuerschätzung), die in der mit dem Suchwert "Steuerschätzung" erzeugten Treffermenge noch gar nicht enthalten sind.

Durch den Einsatz des erfindungsgemäßen Spezifikationsmodul 32 wird erreicht, dass automatisch Vorschläge für die Präzisierung der Suchanfragen angezeigt werden. Schon nach dem ersten Spezifikationsschritt gewinnt eine durch Elemente der Heuristik ergänzte Suchanfrage entscheidend an Relevanz. Das Rekursionsmodul 33 übergibt die relevanten Suchwerte (hier Metadaten (Typ 2)) erfindungsgemäß zurück an das Suchmodul 31. Die Spezifikation kann dann so lange wiederholt werden, bis die Suchanfrage angemessen verfeinert ist bzw. bis das gewünschte Ergebnis erreicht ist. Bei dem gewünschten Ergebnis kann es sich um eine bestimmte Anzahl von Treffern handeln, um eine bestimmte Anzahl von Durchläufen oder es kann ein anderes Abbruchkriterium herangezogen werden.

Der Pfiff des erfindungsgemäßen Verfahrens liegt nicht nur darin, die Trefferliste einer konventionellen Archivsuche als Zwischenschritt für eine Auswertung heranzuziehen, sondern resultiert vor allem daraus, dass die Auswertung mit Hilfe eines Spezifikationsmodul 32 realisiert wird, das eine spezifische Auswertung der Metadaten garantiert (hier der Metadaten (Typ 2), also eine Auswertung der Typusdaten/Ausprägungen im Segment <Typus>). Mit Hilfe des statistischen Verfahrens wird im Beispiel eine Heuristik relevanter Themen ausgegeben. Dabei werden die fachlich erschlossenen Dokumente als Wissensbasis genutzt. Das Spezifikationsmodul 32 nutzt eine Treffermenge, die einen Ausschnitt der Wissensbasis repräsentiert, um sie zur Spezifikation der Nutzerabfragen einzusetzen. Das Spezifikationsmodul 32 und Rekursionsmodul 33 werden zum "Inferenzmechanismus" für ein Archivsystem mit fachlich erschlossenen Dokumenten. Durch die, über das Erschließungsmodul 5 forcierte einheitliche Erschließungspraxis, wird die Wissensbasis implizit kontrolliert. So wird es möglich, dass das Spezifikationsmodul 32 die Abfragen gemäß der Erschließungspraxis (re-) spezifiziert.

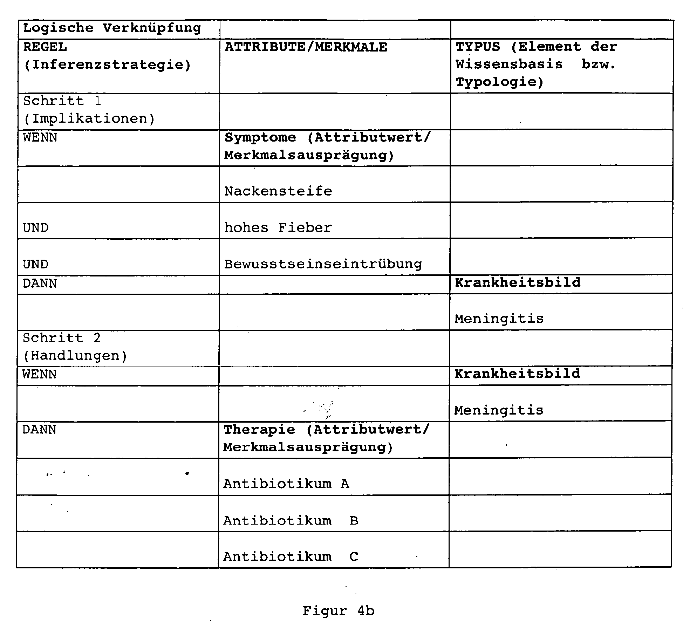

Fig. 4b zeigt die wesentlichen Merkmale eines dem Stand der Technik entsprechenden regelbasierten Expertensystems: jedem Krankheitsbild einer medizinischen Typologie werden regelbasiert Attribute (Symptome oder Therapien) zugeordnet. Entsprechend den Attributwerten (z. B. Nackensteife, Fieber usw.) erfolgt dann eine eindeutige Zuweisung von Symptomen auf Krankheitsbilder und später von Krankheitsbildern auf Therapien (vgl. Georg Marckmann, Diagnose per Computer?, Deutscher Ärzte-Verlag 2003, Seite 44 ff.).

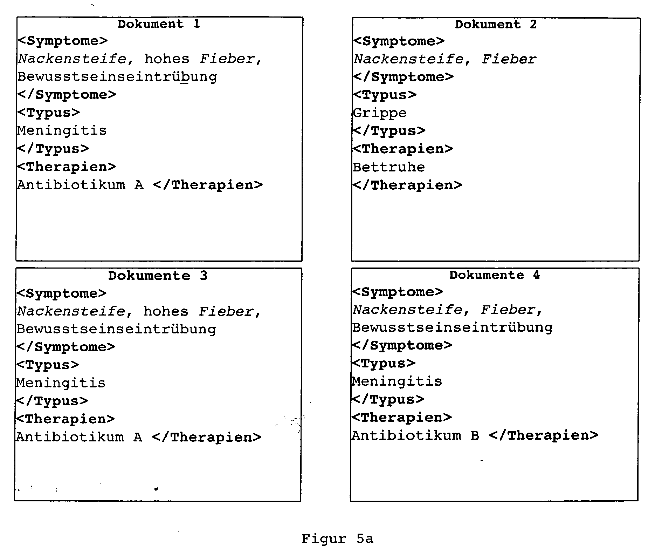

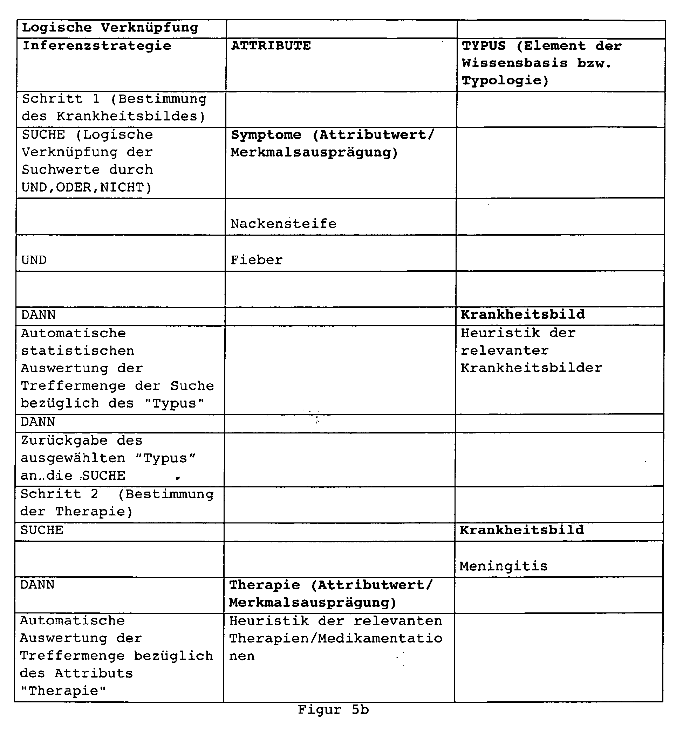

In Fig. 5a ist eine strukturierte/formalisierte Dokumentation der medizinischen Wissenspraxis (das Erschließungsmodul 5 organisiert im Wissensprozess den Aufbau der Wissensbasis, des elektronischen Archivs), dargestellt; Fig. 5b zeigt beispielhaft wie die kollektive (typologiebasierte) Wissenspraxis über das Spezifikationsmodul 32 rekonstruiert wird. Die schematische Darstellung verdeutlicht die Leistungsfähigkeit der Erfindung für die Konzeption eines medizinischen Expertensystems.

Fig. 5a zeigt vier fachlich erschlossene Dokumente eines elektronischen Archivs, das eine medizinische Typologie repräsentiert. Die Dokumente 1, 2, 3, 4 enthalten jeweils die Segmente <Typus>, für Metadaten (Typ 2), hier können prinzipiell alle, fachlich angemessenen und gemäß einer zugrunde liegenden medizinischen Typologie zugelassenen Krankheitsbilder eingetragen werden. Die Segmente <Symptome> und <Therapien> ermöglichen die Eingabe der für ein Krankheitsbild relevanten Symptome und Therapien. Im Beispielarchiv sind entsprechende Merkmalsausprägungen realisiert.

Fig. 5b zeigt, dass die starren Regeln des regelbasierten Expertensystems, wie sie in Fig. 4b dargestellt sind, erfindungsgemäß in nicht-starrer Weise, durch die in der Wissensbasis dokumentierte praktisch Anwendung der medizinischen Typologie, durch die dokumentierte faktische Regelanwendung in der Wissenspraxis (von Medizinern) substituiert wird. Durch eine Abfrage wird mit Hilfe des Spezifikationsmoduls 32 die Wissensbasis inferiert (Fig. 5b), so dass mit Hilfe der Erfindung Heuristiken erzeugt werden können.

Wendet man das erfindungsgemäße Verfahren in der in Fig. 5b vorgestellte Weise auf die in Fig. 5a dargestellten Beispieldokumente an, wird für die Symptome "Fieber" und "Nackensteife" eine Heuristik der relevanten Krankheitsbilder angezeigt: das Krankheitsbild "Meningitis" wurde dreimal und das Krankheitsbild "Grippe" einmal diagnostiziert. Auf Basis der bisherigen diagnostischen Praxis wird dem Nutzer eine hohe Relevanz der Diagnose "Meningitis" (75% der Fälle) und eine eher geringe Relevanz der Diagnose Grippe (25% der Fälle) angezeigt.

### Die Heuristiken

Eine Heuristik der für die Symptome "Fieber" und "Nackensteife" relevanten Krankheitsbilder:

| Krankheitsbilder | Relevanz der Krankheitsbilder abgeleitet aus allen für die Symptome "Fieber" und "Nackensteife" dokumentierten Diagnosen |
|---|---|
| Meningitis | 3 (75%) |
| Grippe | 1 (25%) |

Eine Heuristik der für das Krankheitsbild "Meningitis" relevanten Therapien/Medikamentationen:

| Therapien/Medikamentation | Relevanz der Therapien/Medikamentationen abgeleitet aus allen für das Krankheitsbild "Meningitis" dokumentierten Verschreibungen |
|---|---|
| Antibiotikum A | 2 (67%) |
| Antibiotikum B | 1 (33%) |

Hier zeigt sich eine wesentliche Stärke des erfindungsgemäßen Archivsystems: Die faktische diagnostische Praxis eines Benutzerkreises kann transparent rekonstruiert werden. D.h. das Archivsystem kann, unter den genannten Bedingungen, jede Wissenspraxis repräsentieren und verfeinern. Denn je besser die repräsentierte Wissenspraxis, desto besser können, vermittelt über die Wissensbasis, die mit Hilfe der Erfindung erzeugten Lösungsvorschläge die Wissenspraxis, den Umgang mit fachlichem Wissen einer Wissensdomäne anleiten.

Im Beispiel erweist sich die Flexibilität des Rekursionsmodul 33 als weiterer Vorteil, da es die Übergabe der Suchwerte in den jeweils relevanten Modus garantiert. So kann ein aus der Heuristik ausgewähltes Krankheitsbild automatisch als Suchwert im Modus "Therapie/Medikamentation" eingesetzt werden. Im Beispiel wurde durch einen Benutzereingriff, das Krankheitsbild "Meningitis" gewählt bzw. diagnostiziert und im Anschluss gleich eine Heuristik möglicher Therapien/Medikamentationen generiert. Die Heuristik zeigt dem Nutzer, dass bei einer Diagnose "Meningitis" in 67% der Fälle das "Antibiotikum A" und 33% der Fälle das "Antibiotikum B" gewählt wurde. Das erfindungsgemäße Verfahren bietet dem Nutzer also wesentliche Empfehlungen und Entscheidungshilfen, indem alle möglichen Krankheitsbilder bzw. Therapien/Medikamentationen aufzeigt werden, die zugleich mit Hilfe aussagefähigen statistischer Kennzahlen gewichtet sind. Das ganze Spektrum alternativer Krankheitsbilder bzw. Behandlungsformen wird in seiner spezifischen Relevanz transparent.

Die vorhergehenden Beispiele verdeutlichen das logische Prinzip, auf dem die Erfindung basiert. Der damit verbundene Auswertungsaufwand steigt bei großen Dokumentmengen exponential. Das Prinzip lässt sich nur dann effizient nutzen, wenn die verschiedenen Auswertungsschritte automatisiert werden. Die Leistung der Erfindung liegt darin, die vorgeschlagenen Auswertungsschritte über die Recheneinheit 3 eines Computers zu automatisieren.

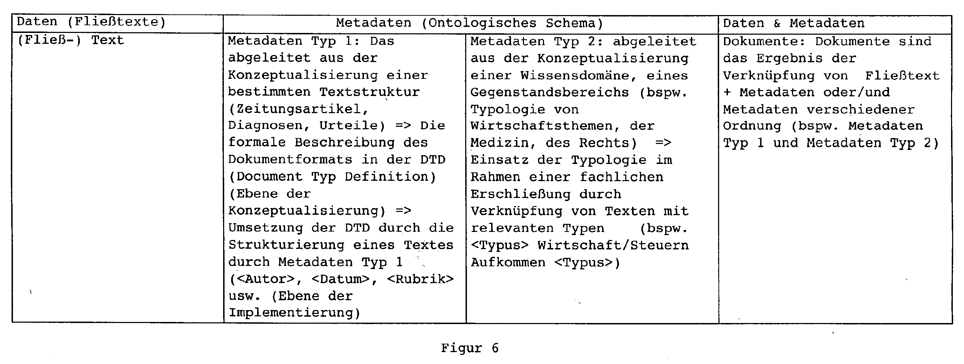

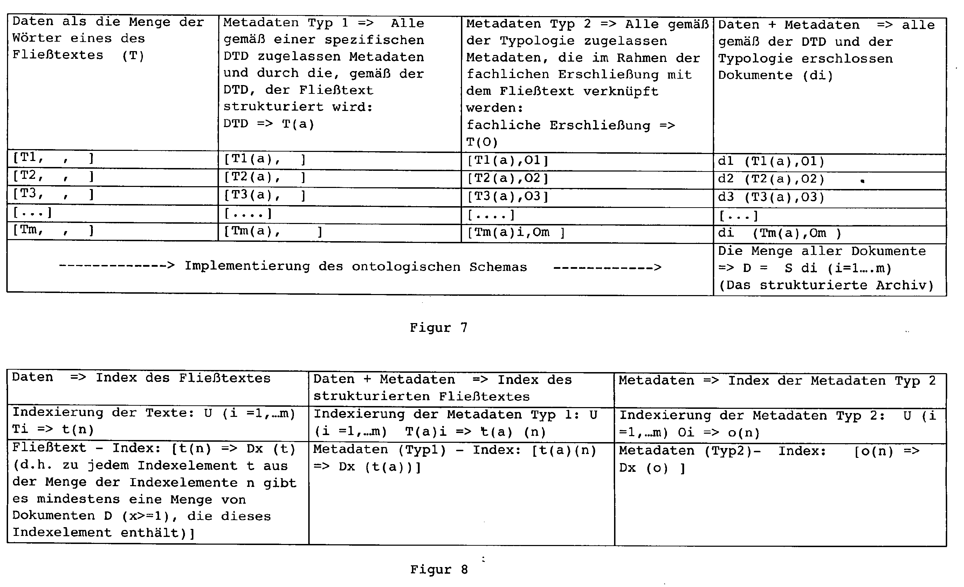

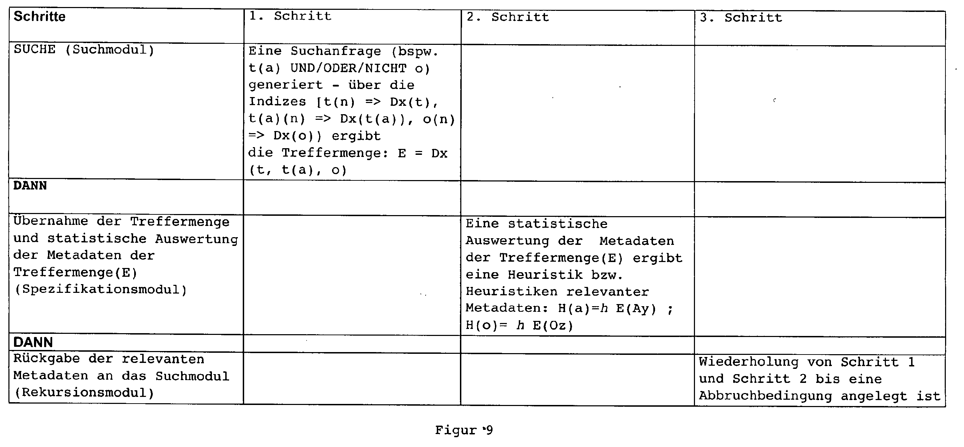

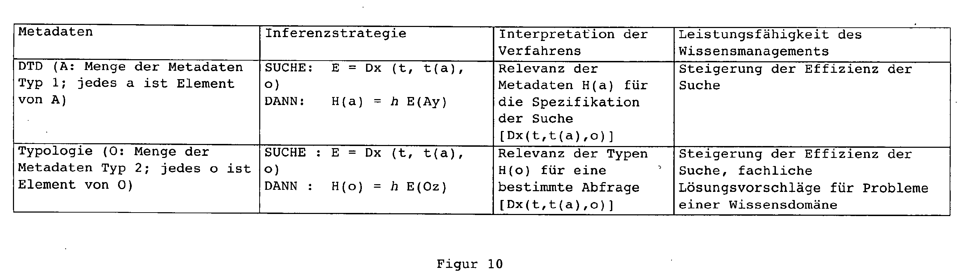

Um die Leistungsfähigkeit der Erfindung im Kontext der komplexen Struktur elektronischer Archive noch einmal zu verdeutlichen, wird in Fig. 6, 7, 8 der formale Aufbau eines elektronischen Archivs kurz skizziert. Figur 6 bezeichnet die verschiedenen Komponenten zur Strukturierung eines Archivs (ontologisches Schema). Figur 7 zeigt, wie die digitalen Texte sukzessiv mit Hilfe des ontologischen Schemas erschlossen werden. Die Implementierung des ontologischen Schemas, über die Verknüpfung der Texte mit relevanten Metadaten, vollzieht sich im Erschließungsmodul 5. Die so erschlossenen Dokumente wandern in den Speicher 4, wo die Summe der erschlossen Dokumente die Struktur des Archivs bzw. die Wissensbasis repräsentieren. Um die Dokumente des Archivs effizient aufzufinden, werden sie, wie in Figur 8 dargestellt, indiziert. Die Speicherung, Indizierung und Suche der Dokumente erfolgt im Beispiel mit Hilfe konventioneller Datenbanktechnologien. Bedingung ist dabei immer, dass die Dokumente als logische Einheit verfügbar und behandelbar sind. Figur 9 zeigt zunächst wie das Suchmodul 31, über den Index, den Zugriff auf die Dokumente organisiert. Die Treffermenge einer Archivsuche lässt sich also angeben, als eine Untermenge der Menge aller Dokumente des Archivs, so wie sie durch gewählten Suchwerte bestimmt wird (E = Dx (t,t(a),o)). Diese Treffermenge ist erfindungsgemäß ein Zwischenschritt für die weitere Spezifikation der Abfrage und zwar so, dass die Treffermenge an ein Spezifikationsmodul 32 übergeben wird, wo die Auswertung der mit der Treffermenge verbundenen Metadaten durch ein statistisches Verfahren erfolgt, dessen Auswertungsergebnisse vorzugsweise in Form von Heuristiken angezeigt werden (H(a), H(o)). Dabei sind jene Metadaten von besonderem Interessen, die Dokumente fachlich, also in Bezug auf eine Wissensdomäne erschließen bzw. klassifizieren (Metadaten Typ 2, also Oi). Die Heuristik H(o)= hE(Oz) ist dann das Ergebnis der Auswertung der Ausprägungsmatrix der Metadaten Typ 2 (Oz) der jeweiligen Treffermenge. Über das Rekursionsmodul 33 werden dann die relevanten Metadaten (01) an das Suchmodul 31 zurück übermittelt. Das Ergebnis der anschließenden Suche sei dargestellt als: E1 = Dx (t,t(a),o1). Weitere Umläufe lassen sich anschließen, bis die Abfrage hinreichend spezifiziert ist. In Figur 10 sind wesentliche Implikationen der Erfindung noch einmal zusammengestellt.

Zusammenfassend seien noch einmal die Vorteile der Erfindung dargestellt.

Das erfindungsgemäße Verfahren lässt sich in ein Abfragesystem integrieren, bei dem das Zusammenspiel von Spezifikationsmodul 32 und Rekursionsmodul 33 eine sukzessive Spezifikation von Abfragen erlaubt, wodurch die Relevanz der Abfrageergebnisse entscheidend erhöht wird. Das erfindungsgemäße Verfahren ist prinzipiell in allen elektronischen Archiven einsetzbar, ermöglicht aber insbesondere, durch die Ausbildung eines entsprechenden Erschließungsmodul 5, avancierte elektronische Archive mit homogener Systemarchitektur für verschiedene Wissensdomänen zu implementieren. Insbesondere unter der Voraussetzung einer homogenen Systemarchitektur und einer fachlich erschlossenen Wissensbasis, liefert es Lösungsvorschläge für Probleme der jeweiligen Wissensdomäne, die von hoher Relevanz sind.

Die Erfindung ermöglicht, die kollektive Wissenspraxis eines Benutzerkreises transparent zu machen, und zwar insoweit sie sich auf ein vom Benutzerkreis geteiltes konzeptionelles Schema, eine Ontologie bezieht und die Wissenspraxis kontinuierlich dokumentiert wird, also in Form spezieller, auf den Problembereich zugeschnittener Dokumentformate im erfindungsgemäßen Archivsystem archiviert wird. Der Benutzerkreis protokolliert seine Wissenspraxis, seinen Umgang mit dem Wissen einer Wissensdomäne und kann dadurch, indem er die Wissensbasis dann abfragt, vom gesammelten "Know How" profitieren.

Die Erfindung betrifft weiter ein elektronisches Archivsystem mit einem Speicher4, einer Recheneinheit 3, einer Eingabe- und einer Ausgabeeinheit 1, 2. Der Speicher 4 ist ausgebildet zum Speichern einer Menge von Dokumenten, die gegliedert sind in (Nutz-)Daten und Metadaten. Die Recheneinheit 3 weist ein Suchmodul 31 auf, das so ausgebildet ist, um anhand von Suchwerten Treffermengen zu generieren, die Ausprägungen von Suchwerten enthalten.

Erfindungsgemäß ist vorgesehen, dass die Recheneinheit 3 ein Spezifikationsmodul 32 und ein Rekursionsmodul 33 umfasst, wobei das Spezifikationsmodul 32 eine Beobachtungseinheit, welche eine mit dem Suchmodul 31 ermittelte Treffermengen übernimmt und die mit den Dokumenten einer Treffermenge verbundenen Metadaten anhand der ersten angelegten Bedingungen herausgreift und als Metadaten-Matrix ausgibt, und eine Auswertungseinheit aufweist, die zur Analyse mittels eines voreinstellbaren statistischen Verfahrens ausgebildet ist und eine Ausprägungsliste der Metadaten ausgibt, und wobei das Rekursionsmodul 33 dazu ausgebildet ist, die Metadaten aus der Ausprägungsliste anhand der zweiten angelegten Bedingungen herauszugreifen und als Suchwerte an das Suchmodul 31 zur Wiederholung zu übergeben, bis ein Abbruchsignal angelegt ist.

Weiter ist vorzugsweise ein Erschließungsmodul 5 vorgesehen, dass die zu erschließenden Dokumente zur Bearbeitung verfügbar macht und die Eingabe von Vorgaben für eine einheitliche fachliche Erschließung der Dokumente des Archivs ermöglicht.

Außerdem ist vorgesehen, dass das Erschließungsmodul 5 es mittels der Bearbeitungseinheit erlaubt, aus den fachlich zu erschließenden Dokumenten Suchwerte herauszugreifen (Drag and Drop) oder alternativ das Erschließungsmodul 5 und die Bearbeitungseinheit mit einem statistisches Verfahren zu koppeln, so dass für jedes zu erschließende Dokument relevante Suchwerte ermittelt und an das Suchmodul 31 übermittelt werden. Die mit Hilfe der Suchwerte durch das Suchmodul 31 ermittelte Treffermenge wird an das Spezifikationsmodul 32 übergeben und über das Rekursionsmodul 33 solange spezifiziert bis ein Abbruchsignal angelegt ist. Die für die fachliche Erschließung relevanten Metadaten werden an das Erschließungsmodul 5 zurück übermittelt und für die fachliche Erschließung der Dokumente einem Nutzer vorgeschlagen oder automatisch mit diesen verknüpft.

Das erfindungsgemäße Archivsystem ermöglicht es damit, ein elektronisches Archivsystem sozusagen selbststeuernd auszubilden, und zwar in einem voreinstellbaren Grad. Selbststeuernd umfasst hierbei eine Selbststeuerung der Abfrage und eine Selbststeuerung der Erschließung bzw. Klassifikation. Dadurch wird ein automatisiertes Archiv gebildet.

## Patentansprüche

1. Abfragesystem mit einer Eingabe- und einer Ausgabeeinheit (1, 2) sowie einer Recheneinheit (3) zum Zusammenwirken mit einem Speicher (4),
wobei die Recheneinheit (3) ausgebildet ist zum Zugreifen auf eine Menge von Dokumenten in dem Speicher (4), die gegliedert sind in (Nutz-)Daten und Metadaten,
wobei die Recheneinheit (3) zur Datenverarbeitung ausgebildet ist und ein Suchmodul (31) aufweist, um in der Menge von Dokumenten mit den oben beschriebenen Eigenschaften anhand von Suchwerten eine Treffermengen mit Ausprägungen der Suchwerte zu generieren,
**dadurch gekennzeichnet, dass**
die Recheneinheit (3) ein Spezifikationsmodul (32) und ein Rekursionsmodul (33) umfasst,
wobei das Spezifikationsmodul (32) eine Beobachtungseinheit, welche eine mit dem Suchmodul (31) ermittelte Treffermenge übernimmt und die in den Dokumenten einer Treffermenge enthaltenen Metadaten anhand von ersten angelegten Bedingungen herausgreift und als Metadatenmatrix ausgibt, und eine Auswertungseinheit aufweist, die zur Analyse mittels eines voreinstellbaren statistischen Verfahrens ausgebildet ist und eine Ausprägungsliste der Metadaten ausgibt, und
wobei das Rekursionsmodul (33) dazu ausgebildet ist, Ausprägungen von Metadaten aus der Ausprägungsliste anhand zweiter angelegter Bedingungen herauszugreifen und als Suchwerte an das Suchmodul (31) zur Wiederholung zu übergeben, bis ein Abbruchsignal angelegt ist.

2. Abfragesystem nach Anspruch 1,
**dadurch gekennzeichnet, dass**
die Recheneinheit (3) ermittelte Ausprägungen von Metadaten an die Ausgabeeinheit (2) zur Darstellung übermittelt.

3. Abfragesystem nach Anspruch 2,
**dadurch gekennzeichnet, dass**
die Eingabeeinheit (1) zur Auswahl von Ausprägungen von Metadaten oder einer Abbruchbedingung und Übermittlung an das Rekursionsmodul (33) ausgebildet ist.

4. Abfragesystem nach einem der vorangehenden Ansprüche,
**dadurch gekennzeichnet, dass**
als Speicher (4) ein Reihenspeicher mit mehreren eingespeicherten statistischen Verfahren vorgesehen ist und mit einem Selektor zur Auswahl eines der statistischen Verfahren zusammenwirkt.

5. Abfragesystem nach Anspruch 4,
**dadurch gekennzeichnet, dass**
ein Scoring-Modul für die verschiedenen statistischen Verfahren vorgesehen ist, das zur automatischen Auswahl eines der Verfahren mittels des Selektors ausgebildet ist.

6. Abfragesystem nach Anspruch 4,
**dadurch gekennzeichnet, dass**
eine automatische Auswahleinrichtung für den Selektor vorgesehen ist.

7. Abfragesystem nach Anspruch 4,
**dadurch gekennzeichnet, dass**
ein manuelles Auswahlelement für den Selektor vorgesehen ist.

8. Abfragesystem nach einem der vorangehenden Ansprüche,
**dadurch gekennzeichnet, dass**
der Speicher (4) als verteilter Speicher ausgeführt ist.

9. Verfahren zum Betreiben eines elektronischen Abfragesystems, dass auf eine Menge von Dokumenten in einem Speicher (4) zugreift, die jeweils in (Nutz-) Daten und in Metadaten gegliedert sind, mit den Schritten:
Eingeben eines Suchwerts mittels einer Eingabeeinheit (1),
Erstellen einer Trefferliste von Dokumenten, die die Suchwerte enthalten, mittels eines Suchmoduls (31) einer Recheneinheit (3),
Generieren einer Metadatenmatrix aus den Metadaten der in der Trefferliste enthaltenen Dokumente anhand erster angelegter Bedingungen mittels einer Beobachtungseinheit der Recheneinheit (3),
Durchführen eines voreinstellbaren statistischen Verfahrens zur Analyse von Ausprägung der Metadaten und Erzeugen einer Ausprägungsliste mittels einer Auswertungseinheit,
Bestimmen einer Rekursion durch Herausgreifen von Ausprägungen der Metadaten aus der Ausprägungsliste anhand zweiter angelegter Bedingungen, und Übergeben an das Suchmodul (31) als Suchwerte zur Durchführung der Rekursion bis zum Erreichen eines Abbruchkriteriums, und Ausgeben der Ergebnisse auf einer Ausgabeeinheit (2).

10. Verfahren nach Anspruch 9,
**dadurch gekennzeichnet, dass**
ein Abfragesystem gemäß einem der Ansprüche 1 bis 8 verwendet wird.

11. Elektronisches Archivsystem mit einer Eingabe- und einer Ausgabeeinheit (1, 2), sowie einer Recheneinheit (3), die mit einem Speicher (4) zusammenwirkt,
wobei der Speicher (4) ausgebildet ist zum Speichern einer Menge von Dokumenten, die gegliedert sind in (Nutz-)Daten und Metadaten, und wobei ein Erschließungsmodul (5) vorgesehen ist, das zur Organisation der Dokumente (mit Hilfe eines Vorgabekriteriums) ausgebildet ist,
wobei die Recheneinheit (3) zur Datenverarbeitung ausgebildet ist und ein Suchmodul (31) aufweist, um in der Menge von Dokumenten mit den oben beschriebenen Eigenschaften anhand von Suchwerten eine Treffermengen mit Ausprägungen der Suchwerte zu generieren,
**dadurch gekennzeichnet, dass**
die Recheneinheit (3) ein Spezifikationsmodul (32) und ein Rekursionsmodul (33) umfasst,
wobei das Spezifikationsmodul (32) eine Beobachtungseinheit enthält, welche eine mit dem Suchmodul (31) ermittelte Treffermenge übernimmt und die in den Dokumenten einer Treffermenge enthaltenen Metadaten anhand erster angelegter Bedingungen herausgreift und als Metadatenmatrix ausgibt, und eine Auswertungseinheit, die zur Analyse mittels eines voreinstellbaren statistischen Verfahrens ausgebildet ist und eine Ausprägungsliste der Metadaten ausgibt, und
wobei das Rekursionsmodul (33) dazu ausgebildet ist, Ausprägungen von Metadaten aus der Ausprägungsliste anhand zweiter angelegter Bedingungen herauszugreifen und als Suchwerte an das Suchmodul (31) zur Wiederholung zu übergeben, bis ein Abbruchsignal angelegt ist.

12. Elektronisches Archivsystem nach Anspruch 11,
**dadurch gekennzeichnet, dass**
es nach einem der Ansprüche 1 bis 8 weitergebildet ist.

13. Elektronisches Archivsystem nach einem der Ansprüche 11 oder 12,
**dadurch gekennzeichnet, dass**
ein Erschließungsmodul (5) vorgesehen ist, das dazu ausgebildet ist, aus in den Speicher (4) einzuspeichernden Dokumenten Suchwerte herauszugreifen, so dass für jedes einzuspeichernde Dokument relevante Suchwerte bestimmt und an das Suchmodul (31) übermittelt werden, wobei das Suchmodul (31) eine als Eingangssignal ermittelte Treffermenge ausgibt und an das Spezifikationsmodul (32) angelegt ist und mittels des Rekursionsmodul (33) Suchwerte solange an das Suchmodel zur Wiederholung übergeben werden, bis ein Abbruchsignal angelegt ist.

14. Elektronisches Archivsystem nach Anspruch 13,
**dadurch gekennzeichnet, dass**
das Erschließungsmodul (5) mit der Eingabe- und Ausgabeeinheit (1, 2) in der Weise zusammenmischt, dass das Herausgreifen manuell, insbesondere mittels Drag and Drop, erfolgt.

15. Elektronisches Archivsystem nach Anspruch 13,
**dadurch gekennzeichnet, dass**
das Erschließungsmodul (5) mit der Beobachtungseinheit in der Weise zusammenwirkt, dass das Herausgreifen mittels des statistischen Verfahrens erfolgt.

16. Elektronisches Archivsystem nach einem der Ansprüche 13 bis 15,
**dadurch gekennzeichnet, dass**
das Rekursionsmodul (33) für die Erschließung relevante Metadaten an das Erschließungsmodul (5) zurück übermittelt.

17. Elektronisches Archivsystem nach Anspruch 16,
**dadurch gekennzeichnet, dass**
die für die Erschließung relevanten Metadaten an die Eingabe-/ Ausgabeeinheit (1, 2) angelegt sind zur Auswahl durch einen Benutzer.

18. Elektronisches Archivsystem nach einem der Ansprüche 16 oder 17,
**dadurch gekennzeichnet, dass**
das Erschließungsmodul (5) dazu ausgebildet ist, die für die Erschließung relevanten Metadaten automatisch mit den Dokumenten zu verknüpfen.
